# FASCICULE DE BREVET EUROPEEN

(11) **EP 3 232 107 B1**
(45) Date de publication et mention de la délivrance du brevet: **20.02.2019**
(21) Numéro de dépôt: 17166226.5
(22) Date de dépôt: 12.04.2017
(51) Int. Cl.: F16L 23/08, F16L 59/18

(54) **DISPOSITIF DE SERRAGE COMPRENANT UN COLLIER DE SERRAGE ET UN MANCHON**
KLEMMVORRICHTUNG, DIE EINE SCHLAUCHKLEMME UND EINE MANSCHETTE UMFASST
CLAMPING DEVICE COMPRISING A CLAMPING COLLAR AND A SLEEVE

(30) Priorité: 12.04.2016 FR 1653222
(43) Date de publication de la demande: 18.10.2017
(73) Titulaire: Etablissements Caillau, 92130 Issy-les-Moulineaux (FR)
(72) Inventeur: PREVOT, Fabrice, 41130 SELLES-SUR-CHER (FR); RIGOLLET, Nicolas, 41200 ROMORANTIN (FR)
(74) Mandataire: Intès, Didier Gérard André

(56) Documents cités:
- EP-B1- 1 451 498
- EP-B1- 2 598 785
- WO-A2-2009/131607
- FR-A1- 3 008 160
- US-A1- 2015 226 368

## Description

Le présent exposé concerne un dispositif de serrage comprenant un collier de serrage ayant une ceinture apte à être serrée autour d'un objet, et un manchon extérieur disposé autour de la ceinture, ledit manchon étant porté par la ceinture via plusieurs pattes de fixation.

Un dispositif de ce type est connu par exemple par le brevet français n° 3 008 160, dans le cas particulier où le manchon sert à assurer une protection thermique dans la région du collier.

Ce dispositif est en particulier installé dans des zones soumises à des contraintes ou des sollicitations importantes, notamment en termes de gradient thermique, de vibrations ou encore de projections d'éléments extérieurs tels que des gravillons ou du fluide. C'est en particulier le cas lorsque le dispositif est installé dans le compartiment moteur ou sous la caisse d'un véhicule.

Le brevet FR 3 008 160 propose différentes solutions pour fixer le manchon à la ceinture du collier. En particulier, il propose de réaliser cette fixation par soudure ou clinchage direct du manchon sur le collier, ou encore par clipsage à l'aide de pattes de clipsage, issues du manchon et enserrant le collier. Ces solutions donnent globalement satisfaction, mais un besoin existe pour sécuriser encore la fixation du manchon par rapport au collier, en particulier pour tenir compte des risques de rupture d'une soudure ou d'un clinchage, ou bien encore des risques de déclipsage intempestifs, par exemple sous l'effet de vibrations ou de chocs, ou encore sous l'effet de contraintes thermiques (les variations de température pouvant atteindre plusieurs centaines de degrés dans le compartiment moteur d'un véhicule).

Ainsi, le présent exposé vise à proposer une solution encore plus sûre du point de vue de la fixation du manchon sur le collier de serrage.

Ainsi, selon un aspect, le présent exposé concerne un dispositif de serrage comprenant un collier de serrage ayant une ceinture apte à être serrée autour d'un objet, et un manchon extérieur disposé autour de la ceinture, ledit manchon étant porté par la ceinture via plusieurs pattes de fixation, dispositif dans lequel chaque patte de fixation est fixée au manchon par une zone de fixation et s'étend vers l'axe du collier à partir de cette zone de fixation jusqu'à une aile de coincement repliée sous la ceinture en étant configurée pour être coincée entre la surface interne de la ceinture et l'objet autour duquel la ceinture doit être serrée.

Classiquement, on pourra prévoir trois ou quatre pattes de fixation. Il n'est cependant pas exclu d'en prévoir deux ou davantage de quatre. Les pattes de fixation sont fixées au manchon par les zones de fixation.

Comme on le verra dans la suite, le manchon peut avoir des dimensions relativement importantes, notamment du point de vue de sa largeur, mesurée selon l'axe du collier. Par conséquent, une surface satisfaisante est disponible pour les zones de fixation entre les pattes et le manchon. Il en résulte que des fixations opérées par soudure ou clinchage, par exemple, entre les pattes de fixation et le manchon peuvent être réalisées sur des surfaces importantes et donc être très peu sujettes au risque de rupture.

La difficulté se pose principalement en ce qui concerne la fixation entre les pattes et le collier, car cette fixation doit être réalisée dans un encombrement plus réduit ou sur des géométries plus complexes, en raison du fait que le collier doit prioritairement assurer un serrage de l'objet autour duquel il est disposé. Selon le présent exposé, la fixation entre les pattes de fixation et le collier est assurée grâce aux ailes de coincement, qui se trouvent coincées entre la surface interne de la ceinture et l'objet autour duquel la ceinture doit être serrée. Les efforts de serrage étant importants, le coincement permet effectivement de retenir de manière très fiable les ailes de coincement sous le collier, de sorte que, en situation d'utilisation, et même dans des conditions extrêmes en particulier en termes de gradient thermique, de vibrations ou de chocs, les ailes restent bien coincées tant que le collier reste serré, ce qui assure le maintien en position du manchon autour du collier.

Optionnellement, l'aile de coincement est apte à être déformée sous l'effet du serrage de la ceinture autour de l'objet.

Optionnellement, l'aile de coincement de chaque patte de fixation s'étend sur une longueur au moins égale à 10%, de préférence au moins égale à 20%, de la largeur de la ceinture, mesurée selon la direction de l'axe du collier.

Selon un aspect, le manchon est enroulé sur lui-même selon un diamètre d'enroulement qui, à l'état libre, c'est-à-dire alors que le manchon est séparé de la ceinture, est supérieur au diamètre que présente le manchon lorsqu'il est porté par la ceinture via les pattes de fixation.

Par exemple, le manchon est de type ouvert, c'est-à-dire qu'il est enroulé depuis sa première extrémité jusqu'à sa deuxième extrémité, et que ces extrémités ne sont pas fixées l'une à l'autre. Dans ce cas, pour le mettre en place sur le collier, il est aisé de le comprimer radialement pour réduire son diamètre de sorte que les ailes de coincement puissent pénétrer sous la ceinture du collier, et de simplement relâcher la pression radiale exercée sur le manchon pour que les ailes de coincement soient retenues sous la ceinture du collier du fait de la tendance du manchon à reprendre élastiquement son diamètre à l'état libre.

Optionnellement, les pattes de fixation sont toutes situées d'un même côté de la ceinture.

Dans ce cas, par exemple, les ailes de coincement des différentes pattes peuvent être amenées sous la ceinture du collier par une simple translation du manchon parallèle à l'axe du collier alors que le manchon est comprimé radialement pour que ces ailes puissent passer sous la ceinture.

Selon un aspect, chaque patte de fixation présente, entre la zone de fixation et l'aile de coincement, une portion d'entretoisement qui est écartée de la ceinture et définit un espace libre entre la ceinture et le manchon.

La portion d'entretoisement maintient le manchon à distance radiale de la ceinture du collier, ce qui, dans certains cas, peut être favorable à la fonction du manchon. Par exemple, grâce à la portion d'entretoisement, le manchon n'est pas en contact avec la ceinture du collier et en est même relativement éloigné, de sorte que, si le manchon sert à assurer une protection thermique, la chaleur n'est pas conduite par conduction entre le manchon et le collier. Selon un autre exemple, le manchon peut servir de protection contre des gravillons ou des chocs, et cette tenue à distance permet que, même si le manchon est légèrement déformé par un choc relativement important, cette déformation soit absorbée dans l'espace libre précité, sans affecter le collier.

Optionnellement, la portion d'entretoisement s'étend sensiblement perpendiculairement à l'axe du collier.

Ceci peut permettre de limiter la surface de contact entre les pattes de fixation et le collier. En effet, la zone de contact correspond à l'aile de coincement, mais la patte de fixation s'écarte du collier dès la jonction entre l'aile de coincement et la portion d'entretoisement.

Selon un aspect, la ceinture présente un premier et un deuxième flanc entre lesquels est délimité un renfoncement interne apte à recevoir un renflement de l'objet devant être serré à l'aide du collier, chacun de ces flancs étant incliné par rapport à l'axe du collier.

Par exemple, le collier peut servir à serrer un objet constitué par deux tubes analogues reliés l'un à l'autre via leurs extrémités respectives qui forment le renflement précité, lequel est logé dans le renfoncement interne de la ceinture du collier. Ceci est par exemple décrit dans le brevet FR 3 008 160.

Optionnellement, les ailes de coincement des pattes de fixation coopèrent avec le même flanc et s'étendent sensiblement parallèlement à ce flanc.

Optionnellement, au moins l'une des pattes de fixation est une patte de fixation et de retenue, qui présente au moins une aile de retenue qui, à l'état libre, est décalée vers l'axe du collier par rapport à l'aile de coincement.

Comme on le verra dans la suite, l'aile de retenue peut servir à retenir le renflement de l'objet devant être serré à l'intérieur de la ceinture en situation de prémontage, avant le serrage du collier. L'indication "à l'état libre" signifie un état dans lequel la patte de fixation et de retenue n'a pas encore subi les efforts de serrage du collier sur l'objet. C'est en particulier l'état dans lequel le manchon est fixé au collier par les pattes de fixation, sans que le collier n'ait été serré.

Optionnellement, l'aile de retenue et l'aile de coincement sont toutes deux formées à l'extrémité libre de la patte de fixation et de retenue opposée à sa zone de fixation, et sont séparées par une découpe.

Selon un aspect, le collier présente des oreilles de serrage en saillie radiale par rapport à la ceinture, et le manchon présente une fenêtre à travers laquelle les oreilles de serrage dépassent.

On accède ainsi aisément aux oreilles de serrage pour serrer le collier alors que le manchon est en place sur ce dernier.

Selon un aspect, le manchon présente une première extrémité située au voisinage de l'une des oreilles de serrage et une deuxième extrémité, qui présente la fenêtre et dont le bout libre coopère avec la première extrémité.

Selon un aspect, le manchon présente au moins une nervure périmétrique.

Cette nervure périmétrique peut permettre de "donner du nerf" au manchon, c'est-à-dire de le rigidifier dans le sens circonférentiel pour favoriser sa tendance à retourner élastiquement vers son diamètre à l'état libre.

Optionnellement, la nervure périmétrique s'étend depuis la première extrémité jusqu'au bout libre et forme une saillie sur une première face du manchon et un creux sur la deuxième face opposée, et le bout libre et la première extrémité se recouvrent, la saillie formée par la nervure sur la première face de l'un des éléments constitués par le bout libre et la première extrémité pénétrant dans le creux formé par la nervure sur la deuxième face de l'autre desdits éléments.

Cette conformation permet de guider l'un par rapport à l'autre le bout libre et la première extrémité lorsque le diamètre du manchon est diminué à l'occasion du serrage du collier et d'assurer un bon positionnement relatif de ces deux éléments.

Le présent exposé sera bien compris et ses avantages apparaîtront mieux à la lecture de la description détaillée qui suit d'un mode de réalisation représenté à titre d'exemples non limitatifs. La description se réfère aux dessins annexés sur lesquels :
- la figure 1 est une vue en perspective d'un dispositif selon le présent exposé ;
- la figure 2 est une vue de côté du dispositif de la figure 1, prise selon la flèche II de la figure 1 ;
- la figure 3 est une vue en coupe dans le plan III de la figure 2 ;
- la figure 4 est une vue en perspective d'une patte de fixation ;
- la figure 5 est une vue en perspective du manchon seul, portant des pattes de fixation ;
- la figure 6 est une vue analogue à la figure 1, pour une variante de réalisation ;
- la figure 7 est une vue de côté, selon la flèche VII de la figure 6 ;
- la figure 8 est une coupe dans le plan VIII de la figure 7 ; et
- les figures 9 et 10 sont des vues en perspective des pattes de fixation selon la variante de réalisation, respectivement avant et après le serrage du collier.

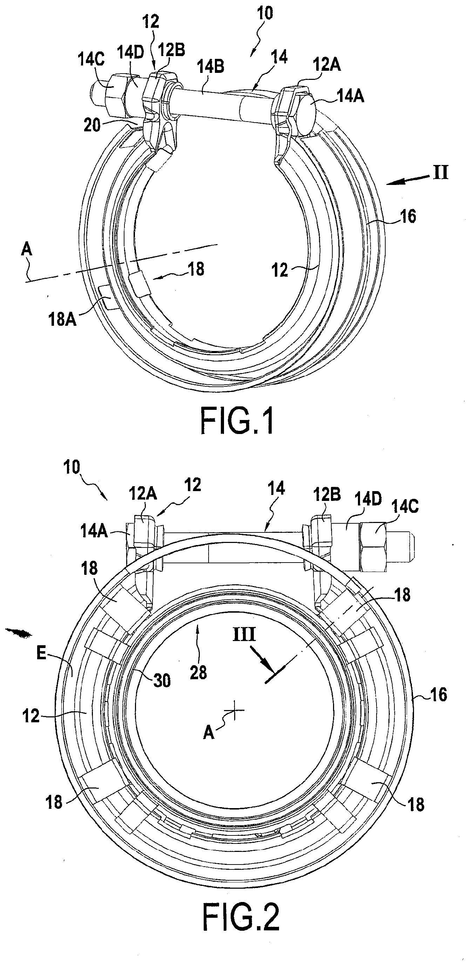

La figure 1 montre un dispositif de serrage comprenant un collier de serrage 10 avec une ceinture 12 ayant des oreilles de serrage relevées radialement, respectivement 12A et 12B. Ces oreilles sont percées et traversées par la tige 14B d'une vis de serrage 14 dont la tête 14A est en appui contre l'oreille 12A et qui peut être serrée contre l'oreille 12B par un écrou 14C. Par ailleurs, pour redresser l'effort de serrage et favoriser la qualité du serrage, une entretoise 14D peut être disposée entre l'écrou 14C et l'oreille 12B.

Le dispositif de serrage comprend également un manchon extérieur 16 qui est porté par le collier en étant disposé autour de la ceinture 12. On comprend, en considérant en particulier les figures 1 à 3, que le manchon entoure la ceinture 12 du collier, en pouvant même s'étendre axialement sur une largeur LM supérieure à la largeur LC de la ceinture, ces largeurs étant mesurées parallèlement à l'axe A du collier. Le manchon peut s'étendre axialement d'un côté de la ceinture, ou bien de part et d'autre de cette dernière. Par ailleurs, le manchon peut n'entourer que partiellement la ceinture, en s'étendant sur une plage angulaire inférieure à 360°.

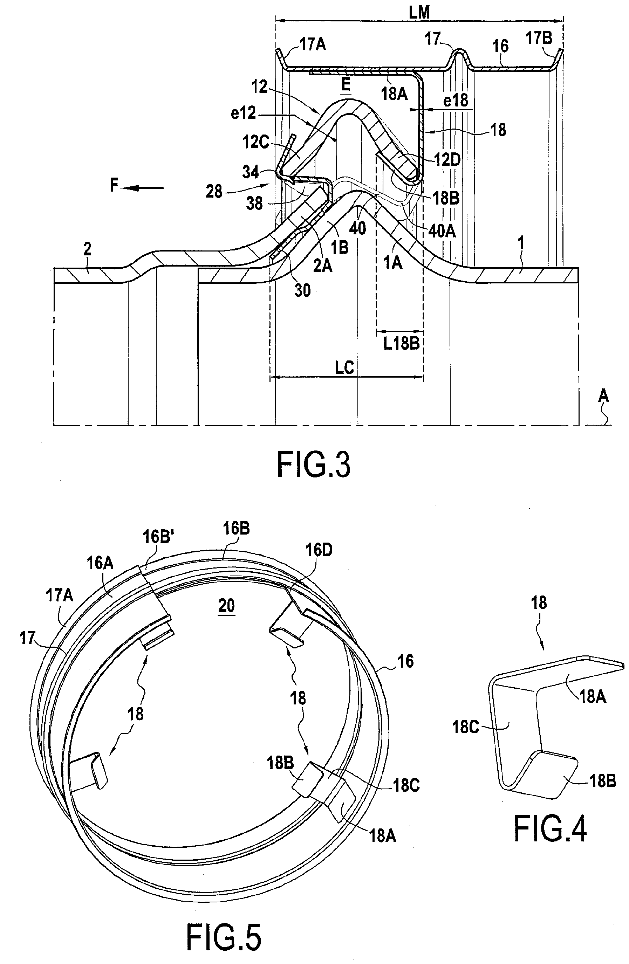

Le manchon est porté par la ceinture via plusieurs pattes de fixation 18. En l'espèce, quatre pattes de fixation sont représentées. Chaque patte de fixation est fixée au manchon par une zone de fixation 18A et s'étend vers l'axe A du collier à partir de cette zone de fixation, jusqu'à une aile de coincement 18B qui est repliée sous la ceinture 12, comme on le voit en particulier sur les figures 1 et 3.

Au sens du présent exposé, on considère que la direction vers l'intérieur est celle qui va radialement vers l'axe A du collier. De même, l'indication selon laquelle le coincement est replié sous la ceinture signifie que cette aile est du côté interne du collier, c'est-à-dire entre la ceinture et l'axe A. De manière générale, lorsqu'on indique qu'un élément est positionné sous un autre élément, ceci signifie qu'il est entre cet autre élément et l'axe A.

Par ailleurs, la patte de fixation 18 présente une portion d'entretoisement 18C qui s'étend entre la zone de fixation 18A et l'aile de coincement 18B. Comme on le voit en particulier sur la figure 3, cette portion d'entretoisement définit un espace libre E entre la ceinture 12 et le manchon 16. En l'espèce, les pattes de fixation sont fixées sous le manchon, les zones de fixation 18A coopérant avec la face interne du manchon. Comme on l'a indiqué, le manchon peut présenter une largeur LM, mesurée axialement, relativement importante. Ainsi, les zones de contact entre la zone de fixation 18A des pattes de fixation et la face interne du manchon peuvent être relativement importantes, ce qui permet une fixation solide. En particulier, les zones de fixation peuvent être fixées au manchon par soudure ou par clinchage sur des surfaces relativement importantes, par exemple de l'ordre de 1 cm². Ceci permet d'assurer une fixation extrêmement solide entre les pattes de fixation et le manchon, cette fixation étant peu sujette à rupture même sous l'effet de vibrations, de variations thermiques ou de chocs importants.

Dans l'exemple représenté, la ceinture 12 du collier est du type présentant un renfoncement interne apte à accueillir un renflement de l'objet devant être serré à l'aide du collier. Plus précisément, comme on le voit sur la figure 3, la ceinture 12 présente un premier flanc 12C et un deuxième flanc 12D entre lesquels est délimité un renfoncement. Ce collier est par exemple du même type que celui qui est décrit dans les brevets européens n° 1 451 498 et 2 598 785. En l'espèce, l'objet devant être serré à l'aide du collier est formé par deux tubes raccordés entre eux, c'est-à-dire un premier tube 1 présentant un évasé définissant une première surface de serrage 1A et un deuxième tube 2 présentant également un évasé définissant une deuxième surface de serrage 2A. Pour le raccordement des tubes, les deux surfaces de serrage 1A et 2A sont rapprochées l'une de l'autre et forment ainsi un renflement de l'objet devant être serré, ce renflement étant logé dans le renfoncement de la ceinture. Le tube 1A présente en fait une jupe terminale 1B qui s'étend à partir du sommet de l'évasé formant la première surface de serrage 1A vers le bout libre de ce premier tube, en se rapprochant de l'axe A. Ainsi, la face interne de l'évasé formant la surface de serrage 2A est située au-dessus de cette jupe 1B lorsque les deux tubes sont assemblés.

En l'espèce, le dispositif représenté comprend une rondelle de prémontage du type décrit dans le brevet européen n° 2 598 785. Dans le présent exposé, cette rondelle est seulement brièvement décrite. Pour plus de détail, on pourra se reporter au brevet européen précité. Cette rondelle 28 est solidarisée avec le collier et présente une portion annulaire tronconique 30 disposée entre la jupe 1B et la surface interne de l'évasé formant la surface de serrage 2A, ainsi que des pattes qui servent à retenir la rondelle par rapport à la ceinture et également à retenir les extrémités assemblées des tubes 1 et 2 sous la ceinture 12, avant le serrage du collier, en situation de prémontage. En particulier, la rondelle peut présenter des pattes internes d'appui sur la surface interne du flanc 12C de la ceinture (ces pattes n'étant pas représentées), des pattes externes 34 qui sont repliées à l'extérieur du flanc 12C et peuvent présenter des languettes 38 dont les extrémités libres s'appuient sur la surface de serrage 2A pour tenir le deuxième tube vis-à-vis d'un déplacement dans le sens F par rapport à la ceinture. La rondelle 28 présente encore des pattes 40 qui, à partir de la portion tronconique 30, s'écartent légèrement de l'axe A pour passer au-dessus du sommet de la surface de serrage 1A, se rapprochent de l'axe A pour présenter un pli 40A retenant la surface de serrage 1A en situation prémontée, puis s'écartent à nouveau de l'axe pour être rabattues à l'extérieur du flanc 12D afin d'être retenues par rapport à la ceinture.

On remarque que le manchon avec les pattes de serrage 18 est parfaitement compatible avec la présence d'une telle rondelle de prémontage. En particulier, comme on le voit sur la figure 2, les pattes 18 n'interfèrent pas avec les pattes 40 car elles sont situées circonférentiellement entre ces dernières.

Cependant, il doit être entendu que le manchon selon le présent exposé peut être prévu sur un collier dépourvu de rondelle interne, et même sur un collier ne présentant pas de renfoncement interne.

Le collier et le manchon de protection peuvent être réalisés en métal, par exemple en acier inox. Comme on le voit sur la figure 3, la bande du collier peut être relativement épaisse pour pouvoir exercer l'effort de serrage exigé. En revanche, la rondelle 28 est déformable (c'est-à-dire nettement plus facilement déformable que la ceinture). On voit que son épaisseur est inférieure à celle de la ceinture. En particulier, la rondelle est réalisée dans un feuillard métallique plus fin que la ceinture.

On voit sur la figure 3 qu'il en va de même pour les pattes de serrage 18, qui peuvent en particulier être réalisées dans le même matériau que la rondelle et dans la même épaisseur. Par exemple, l'épaisseur e18 des pattes 18 peut être comprise entre 10% et 40% de l'épaisseur e12 de la ceinture. Ainsi, les pattes de fixation 18 peuvent être aisément déformables.

Ceci est en particulier intéressant en ce qui concerne leurs ailes de coincement 18B. En effet, même si la figure 3 montre l'aile de coincement 18B plaquée contre la face interne du flanc 12D de la ceinture avant le serrage du collier, il pourrait ne pas en aller ainsi. L'aile de coincement pourrait initialement avoir, par rapport à l'axe A, une inclinaison différente de celle du flanc 12D, par exemple être moins inclinée que ce flanc 12D. Cependant, lors du serrage du collier, cette aile de coincement se déforme comme la rondelle 28 pour épouser la forme de la surface interne de la ceinture et ne pas nuire au serrage.

On voit sur la figure 3 que l'aile de coincement 18B de la patte de fixation 18 s'étend sur une longueur L18B, mesurée parallèlement à l'axe A du collier, qui est de l'ordre de 30% de la largeur LC de la ceinture, également mesurée selon la direction de l'axe du collier. En particulier, la longueur L18B peut être au moins égale à 10%, voire au moins égale à 20% de la largeur LC. Ceci assure un coincement sur une longueur suffisante pour effectivement et efficacement retenir la patte sous le collier. Il n'est d'ailleurs pas exclu que l'aile de coincement s'étende jusqu'au flanc 12C.

Le manchon 16 est enroulé sur lui-même selon un diamètre d'enroulement DE. La figure 5 montre le manchon à l'état libre, dans lequel ce diamètre DE est légèrement supérieur au diamètre que présente le manchon alors qu'il est porté par la ceinture, même avant le serrage du collier. Par ailleurs, on voit sur les figures 1 à 3 que les pattes de fixation 18 sont toutes situées d'un même côté de la ceinture 12. Si l'on considère le manchon seul, non monté sur le collier, les pattes de fixation 18 sont alors toutes situées dans une même tranche radiale de ce manchon, comme le montre la figure 5. Par ailleurs, on voit encore sur la figure 5 que le manchon est enroulé sur lui-même entre une première extrémité 16A et une deuxième extrémité 16B, formées en l'espèce sur le bord d'une fenêtre 20 à travers laquelle les oreilles de serrage 12A et 12B dépassent. On voit en particulier sur la figure 1 que, à l'état monté, la première extrémité 16A du manchon est située du côté de l'oreille 12B. Le bout libre 16B' de la deuxième extrémité du manchon coopère à glissement relatif avec la première extrémité 16A. Ainsi, par rapport à son diamètre à l'état libre, le diamètre du manchon peut être diminué par une simple compression radiale.

On relève ici que la deuxième extrémité 16B du manchon forme en l'espèce une languette qui borde circonférentiellement la fenêtre 20. Ceci permet de faire en sorte que le manchon s'étende au-dessus de l'objet à serrer, la languette précitée étant axialement à côté des moyens de serrage du collier.

Bien entendu, même si l'on a montré sur les exemples représentés une seule languette sur un seul bord circonférentiel de la fenêtre, il doit être entendu qu'on pourrait avoir deux languettes sur chacun des deux bords circonférentiels de la fenêtre, en particulier si le manchon était prolongé axialement dans le sens F indiqué sur la figure 3, de manière à s'étendre davantage au-dessus du tube 2, comme dans le brevet FR 3 008 160.

Il serait cependant également possible que la deuxième extrémité du manchon soit analogue à la première extrémité, et borde axialement la fenêtre 20, auquel cas la ligne de découpe 16D représentée sur la figure 5 s'étendrait sur l'intégralité de la largeur du manchon.

Dans l'une quelconque des possibilités qui viennent d'être évoquées, il est possible de réduire le diamètre du manchon par une compression radiale. On voit par ailleurs que, à l'état libre, les ailes de coincement sont recourbées en crochets légèrement relevés pour s'éloigner de l'axe du collier jusqu'à leurs extrémités libres. Ainsi, pour mettre en place le manchon sur le collier avant le serrage de ce dernier, il suffit de comprimer radialement le manchon jusqu'à réduire son diamètre de telle sorte que les extrémités libres des ailes de coincement définissent ensemble un diamètre inférieur au diamètre du bord interne du flanc 12D de la ceinture, et de déplacer axialement le manchon jusqu'à insérer ainsi les ailes de coincement sous la ceinture, puis de simplement relâcher la contrainte radiale exercée sur le manchon de telle sorte qu'il reprenne élastiquement des dimensions qui plaquent les ailes de coincement contre la face interne de la ceinture. Ainsi, lorsque le manchon est en place, les pattes de fixation 18 coopèrent avec le même flanc 12D de la ceinture et les ailes de coincement s'étendent sensiblement parallèlement à ce flanc.

On voit encore, en particulier sur les figures 3 et 5, que le manchon 16 présente une nervure périmétrique 17. Cette nervure est par exemple formée par un bossage qui s'étend selon la circonférence du manchon, dans une tranche radiale. Cette nervure peut permettre de rigidifier le manchon de manière à lui conférer les propriétés de retour élastique souhaitées vers son diamètre à l'état libre.

Par ailleurs, la nervure périmétrique 17 s'étend en l'espèce depuis la première extrémité 16A du manchon jusqu'au bout libre 16B'. Elle forme une saillie sur la face externe du manchon, et un creux sur sa face interne. Le bout libre 16B' et la première extrémité 16A se recouvrent. On comprend en l'espèce que le bout libre 16B' s'étend du côté interne de la première extrémité 16A. Dans ce cas, la saillie formée par la nervure 17 sur la face externe du bout libre pénètre dans le creux qu'elle forme sur la face interne de la première extrémité 16A. La nervure sert en quelque sorte à assurer un guidage entre le bout libre et la première extrémité 16A lorsque le diamètre du manchon est modifié, en particulier lors de la mise en place de ce dernier et du serrage du collier. Ceci permet également de caler axialement la languette formée à la deuxième extrémité 16B par rapport à la première extrémité 16A pour assurer une bonne tenue axiale du manchon.

Bien entendu, on pourrait inverser la conformation, en réalisant la nervure de sorte que le creux soit sur la face externe. On pourrait également prévoir plusieurs nervures du type précité. On relève d'ailleurs que les bords axiaux 17A et 17B du manchon sont légèrement relevés vers l'extérieur. Le bord axial 17A ainsi relevé à la deuxième extrémité 16B s'engage ainsi sous le bord axial 17A à la première extrémité 16A et contribue également au calage axial respectif des deux extrémités du manchon.

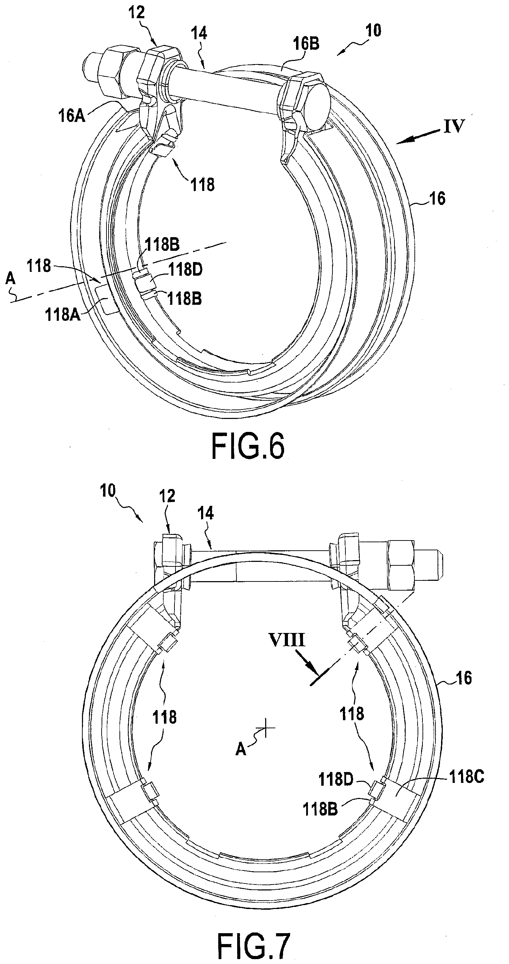

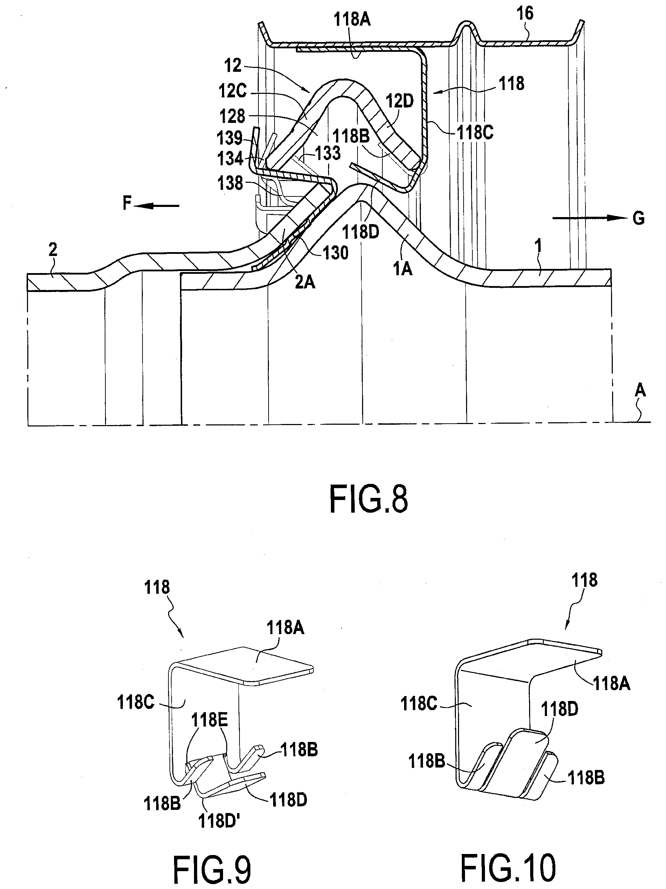

En référence aux figures 6 à 10, on décrit maintenant une variante de réalisation. Sur cette variante, le collier et le manchon sont identiques à ceux des figures précédentes, et sont donc désignés par les mêmes références. On relève en revanche que la rondelle 28 est absente. En effet, dans cette variante, les pattes de fixation du manchon sur le collier servent également à assurer un prémontage des tubes dans le collier avant le serrage. En l'espèce, ces pattes de fixation 118 sont analogues aux pattes 18 précédemment évoquées en ce qu'elles comportent une zone de fixation 118A, une aile de coincement 118B, et une portion d'entretoisement 118C. Les pattes de fixation présentent ainsi la même forme globale que les pattes 18, la portion d'entretoisement étant en l'espèce orientée sensiblement radialement. Cependant, dans cette variante, les pattes de fixation 118 sont des pattes de fixation et de retenue. Ainsi, en plus de l'aile de coincement 118B, elles présentent une aile de retenue 118D qui est décalée vers l'axe du collier par rapport à l'aile de coincement. Comme on le voit sur la figure 8, l'aile de retenue 118D s'étend ainsi davantage vers l'axe du collier que l'aile de coincement 118B, à l'état libre, c'est-à-dire avant le serrage du collier et la déformation de ces ailes sous l'effet du serrage. Cette aile de retenue définit une distance minimale par rapport à l'axe du collier qui est inférieure au diamètre du sommet de la surface de serrage 1A du tube 1. Ainsi, lors de la mise en place du tube 1 sous le collier, le sommet de la surface de serrage 1A fait fléchir l'aile de retenue vers l'extérieur de manière à passer sous cette aile, puis l'aile de retenue reprend élastiquement sa position de repos représentée sur la figure 8. Ainsi, elle s'oppose au retrait du tube 1 par rapport au collier dans le sens G indiqué sur la figure 8, avant le serrage du collier.

Il convient de relever que le dispositif de serrage peut être équipé également de moyens de prémontage pour le tube 2 s'opposant à son retrait dans le sens F. C'est ce que montre la figure 8, sur laquelle on voit une rondelle 128 globalement analogue à celle que divulgue le brevet européen n° 1 451 498. Cette rondelle est ici décrite de manière succincte. Elle présente une portion 130 tronconique située entre les tubes 1 et 2, des pattes internes 133 en appui contre la face interne du flanc 12C de la ceinture 12, des pattes externes 134 coopérant avec le bord de ce flanc 12C du côté externe, avec des languettes 138 en appui contre la surface de serrage 2A du tube 2. De plus, cette rondelle présente des pattes externes 139 sensiblement axiales, dont l'extrémité libre est pliée vers l'extérieur. Cette rondelle 130 est solidarisée avec la ceinture du collier et sert ainsi à retenir le deuxième tube 2 à l'état pré-monté à l'intérieur du collier. Ainsi, les deux tubes peuvent être raccordés à l'intérieur du dispositif de serrage avant le serrage du collier.

On voit en particulier sur les figures 9 et 10 que l'aile de retenue 118D et l'aile de coincement 118B sont toutes deux formées à l'extrémité libre de la patte 118 opposée à sa zone de fixation 118A. Elles sont séparées l'une de l'autre par une découpe 118E. Ainsi, cette portion terminale de la patte 118 pourrait seulement comporter une aile de retenue et une aile de coincement. Cependant, dans l'exemple représenté, l'aile de retenue 118D est disposée entre deux ailes de coincement 118B, de sorte que deux découpes situées de part et d'autre de l'aile de retenue 118D sont réalisées.

A l'état libre, comme représenté sur les figures 8 et 9, l'aile de retenue s'étend davantage vers l'axe du collier que les ailes de coincement de manière à réaliser le prémontage évoqué ci-dessus. En particulier, elles présentent alors une zone de pliure 118D' proche de l'axe et située sous le flanc 12D du collier. Comme indiqué précédemment, les pattes de fixation sont déformables. La figure 10 montre l'aspect de la patte 118 après le serrage du collier, et l'on voit sur cette figure que l'aile de retenue 118D a été ramenée dans le même plan que la ou les aile(s) de coincement 118B en étant, comme elles, coincée entre la périphérie interne du collier et l'objet serré par le collier.

## Revendications

1. Dispositif de serrage comprenant un collier de serrage (10) ayant une ceinture (12) apte à être serrée autour d'un objet, et un manchon extérieur (16) disposé autour de la ceinture (12), ledit manchon étant porté par la ceinture via plusieurs pattes de fixation (18 ; 118),
**caractérisé en ce que** chaque patte de fixation (18 ; 118) est fixée au manchon (16) par une zone de fixation (18A ; 118A) et s'étend vers l'axe (A) du collier à partir de cette zone de fixation jusqu'à une aile de coincement (18B ; 118B) repliée sous la ceinture en étant configurée pour être coincée entre la surface interne de la ceinture et l'objet autour duquel la ceinture doit être serrée.

2. Dispositif selon la revendication 1, **caractérisé en ce que** l'aile de coincement (18B ; 118B) est apte à être déformée sous l'effet du serrage de la ceinture (12) autour de l'objet.

3. Dispositif selon la revendication 1 ou 2, **caractérisé en ce que** l'aile de coincement (18B ; 118B) de chaque patte de fixation (18 ; 118) s'étend sur une longueur (L18B) au moins égale à 10%, de préférence au moins égale à 20%, de la largeur (LC) de la ceinture (12), mesurée selon la direction de l'axe (A) du collier.

4. Dispositif selon l'une quelconque des revendications 1 à 3, **caractérisé en ce que** le manchon (16) est enroulé sur lui-même selon un diamètre d'enroulement (DE) qui, à l'état libre, c'est-à-dire alors que le manchon est séparé de la ceinture (12), est supérieur au diamètre que présente le manchon lorsqu'il est porté par la ceinture via les pattes de fixation (18 ; 118).

5. Dispositif selon l'une quelconque des revendications 1 à 4, **caractérisé en ce que** les pattes de fixation (18 ; 118) sont toutes situées d'un même côté de la ceinture (12).

6. Dispositif selon l'une quelconque des revendications 1 à 5, **caractérisé en ce que** chaque patte de fixation (18 ; 118) présente, entre la zone de fixation (18A ; 118A) et l'aile de coincement (18B ; 118B), une portion d'entretoisement (18C ; 118C) qui est écartée de la ceinture (12) et définit un espace libre (E) entre la ceinture et le manchon.

7. Dispositif selon la revendication 6, **caractérisé en ce que** la portion d'entretoisement (18C ; 118C) s'étend sensiblement perpendiculairement à l'axe (A) du collier.

8. Dispositif selon l'une quelconque des revendications 1 à 7, **caractérisé en ce que** la ceinture (12) présente un premier et un deuxième flanc (12C, 12D) entre lesquels est délimité un renfoncement interne apte à recevoir un renflement (1A, 1B) de l'objet devant être serré à l'aide du collier, chacun de ces flancs étant incliné par rapport à l'axe (A) du collier.

9. Dispositif selon la revendication 8, **caractérisé en ce que** les ailes de coincement (18B ; 118B) des pattes de fixation (18 ; 118) coopèrent avec le même flanc (12D) et s'étendent sensiblement parallèlement à ce flanc (12D).

10. Dispositif selon la revendication 8 ou 9, **caractérisé en ce qu'**au moins l'une des pattes de fixation (118) est une patte de fixation et de retenue, qui présente au moins une aile de retenue (118D) qui, à l'état libre, est décalée vers l'axe du collier par rapport à l'aile de coincement (118B).

11. Dispositif selon la revendication 10, **caractérisé en ce que** l'aile de retenue (118D) et l'aile de coincement (118B) sont toutes deux formées à l'extrémité libre de la patte de fixation et de retenue (118) opposée à sa zone de fixation, et sont séparées par une découpe (118E).

12. Dispositif selon l'une quelconque des revendications 1 à 11, **caractérisé en ce que** le collier (10) présente des oreilles de serrage (12A, 12B) en saillie radiale par rapport à la ceinture, et **en ce que** le manchon (16) présente une fenêtre (20) à travers laquelle les oreilles de serrage dépassent.

13. Dispositif selon la revendication 12, **caractérisé en ce que** le manchon (16) présente une première extrémité (16A) située au voisinage de l'une des oreilles de serrage (12B) et une deuxième extrémité (16B), qui présente la fenêtre (20) et dont le bout libre (16B') coopère avec la première extrémité.

14. Dispositif selon l'une quelconque des revendications 1 à 13, **caractérisé en ce que** le manchon (16) présente au moins une nervure périmétrique (17).

15. Dispositif selon la revendication 14, prise en combinaison avec la revendication 13, **caractérisé en ce que** la nervure périmétrique (17) s'étend depuis la première extrémité (16A) jusqu'au bout libre (16B'), et forme une saillie sur une première face du manchon et un creux sur la deuxième face opposée, et **en ce que** le bout libre (16B') et la première extrémité (16A) se recouvrent, la saillie formée par la nervure sur la première face de l'un des éléments constitués par le bout libre et la première extrémité pénétrant dans le creux formé par la nervure sur la deuxième face de l'autre desdits éléments.

## Patentansprüche

1. Klemmvorrichtung umfassend eine Klemmschelle (10) mit einem Gurt (12), die geeignet ist, um einen Gegenstand herum geklemmt zu werden, und eine äußere Manschette (16), die um den Gurt (12) herum angeordnet ist, wobei die Manschette von dem Gurt über mehrere Befestigungslaschen (18; 118) getragen wird,
**dadurch gekennzeichnet, dass** jede Befestigungslasche (18; 118) an der Manschette (16) durch eine Befestigungszone (18A; 118A) befestigt ist und sich zu der Achse (A) der Klemmschelle ausgehend von dieser Befestigungszone bis zu einem Klemmflügel (18B; 118B) erstreckt, der unter dem Gurt zurückgebogen ist, wobei er so ausgestaltet ist, dass er zwischen der inneren Oberfläche des Gurts und dem Gegenstand, um welchen der Gurt geklemmt werden soll, eingeklemmt wird.

2. Vorrichtung nach Anspruch 1, **dadurch gekennzeichnet, dass** der Klemmflügel (18B; 118B) geeignet ist, unter der Klemmwirkung des Gurts (12) um den Gegenstand herum verformt zu werden.

3. Vorrichtung nach Anspruch 1 oder 2, **dadurch gekennzeichnet, dass** der Klemmflügel (18B; 118B) jeder Befestigungslasche (18; 118) sich über eine Länge (L18B) zumindest gleich 10 %, vorzugsweise zumindest gleich 20 %, der Breite (LC) des Gurts (12) erstreckt, gemessen in der Richtung der Achse (A) der Klemmschelle.

4. Vorrichtung nach einem der Ansprüche 1 bis 3, **dadurch gekennzeichnet, dass** die Manschette (16) auf sich selbst gemäß einem Aufrolldurchmesser (DE) aufgerollt ist, der im freien Zustand, das heißt, wenn die Manschette von dem Gurt (12) getrennt ist, größer als der Durchmesser ist, den die Manschette aufweist, wenn sie von dem Gurt über die Befestigungslaschen (18; 118) getragen wird.

5. Vorrichtung nach einem der Ansprüche 1 bis 4, **dadurch gekennzeichnet, dass** die Befestigungslaschen (18; 118) sich alle auf derselben Seite des Gurts (12) befinden.

6. Vorrichtung nach einem der Ansprüche 1 bis 5, **dadurch gekennzeichnet, dass** jede Befestigungslasche (18; 118) zwischen der Befestigungszone (18A; 118A) und dem Klemmflügel (18B; 118B) einen Versteifungsabschnitt (18C; 118C) aufweist, der von dem Gurt (12) abgespreizt ist und einen freien Raum (E) zwischen dem Gurt und der Manschette definiert.

7. Vorrichtung nach Anspruch 6, **dadurch gekennzeichnet, dass** der Versteifungsabschnitt (18C; 118C) sich im Wesentlichen senkrecht auf die Achse (A) der Klemmschelle erstreckt.

8. Vorrichtung nach einem der Ansprüche 1 bis 7, **dadurch gekennzeichnet, dass** der Gurt (12) einen ersten und einen zweiten Seitenteil (12C, 12D) aufweist, zwischen welchen eine innere Aussparung begrenzt wird, die dazu geeignet ist, eine Ausbuchtung (1A, 1B) des mithilfe der Klemmschelle einzuklemmenden Gegenstands aufzunehmen, wobei jeder dieser Seitenteile in Bezug auf die Achse (A) der Klemmschelle geneigt ist.

9. Vorrichtung nach Anspruch 8, **dadurch gekennzeichnet, dass** die Klemmflügel (18B; 118B) der Befestigungslaschen (18; 118) mit demselben Seitenteil (12D) zusammenwirken und sich im Wesentlichen parallel zu diesem Seitenteil (12D) erstrecken.

10. Vorrichtung nach Anspruch 8 oder 9, **dadurch gekennzeichnet, dass** zumindest eine der Befestigungslaschen (118) eine Befestigungs- und Haltelasche ist, die zumindest einen Halteflügel (118D) aufweist, der im freien Zustand zu der Achse der Klemmschelle in Bezug auf den Klemmflügel (118B) versetzt ist.

11. Vorrichtung nach Anspruch 10, **dadurch gekennzeichnet, dass** der Halteflügel (118D) und der Klemmflügel (118B) alle beide an dem freien Ende der Befestigungs- und Haltelasche (118), das ihrer Befestigungszone entgegengesetzt ist, ausgebildet sind und durch einen Ausschnitt (118E) getrennt sind.

12. Vorrichtung nach einem der Ansprüche 1 bis 11, **dadurch gekennzeichnet, dass** die Klemmschelle (10) Klemmösen (12A, 12B) aufweist, die radial in Bezug auf den Gurt vorspringen, und dass die Manschette (16) ein Fenster (20) aufweist, durch welches die Klemmösen hindurchragen.

13. Vorrichtung nach Anspruch 12, **dadurch gekennzeichnet, dass** die Manschette (16) ein erstes Ende (16A), das benachbart zu einer der Klemmösen (12B) angeordnet ist, und ein zweites Ende (16B) aufweist, welches das Fenster (20) aufweist, und dessen freier Endpunkt (16B') mit dem ersten Ende zusammenwirkt.

14. Vorrichtung nach einem der Ansprüche 1 bis 13, **dadurch gekennzeichnet, dass** die Manschette (16) zumindest eine umlaufende Rippe (17) aufweist.

15. Vorrichtung nach Anspruch 14, in Kombination mit Anspruch 13, **dadurch gekennzeichnet, dass** die umlaufende Rippe (17) sich von dem ersten Ende (16A) bis zu dem freien Endpunkt (16B') erstreckt und einen Vorsprung auf einer ersten Fläche der Manschette und eine Vertiefung auf der zweiten, entgegengesetzten Fläche bildet, und dass der freie Endpunkt (16B') und das erste Ende (16A) sich überdecken, wobei der Vorsprung, der durch die Rippe auf der ersten Fläche eines der Elemente, die aus dem freien Endpunkt und dem ersten Ende bestehen, gebildet wird, in die Vertiefung eintaucht, die durch die Rippe auf der zweiten Fläche des anderen der Elemente gebildet wird.

## Claims

1. A clamping device comprising a clamping collar (10) having a belt (12) suitable for being tightened around an article, and an outer sleeve (16) disposed around the belt (12), said sleeve being carried by the belt by means of a plurality of fastener tabs (18; 118);
the device being **characterized in that** each fastener tab (18; 118) is fastened to the sleeve (16) by a fastening zone (18A; 118A) and extends towards the axis (A) of the collar from said fastening zone until it reaches a pinch branch (18B; 118B), folded back under the belt and configured to be pinched between the inside surface of the belt and the article around which the belt is to be tightened.

2. A device according to claim 1, **characterized in that** the pinch branch (18B; 118B) is suitable for being deformed under the effect of tightening the belt (12) around the article.

3. A device according to claim 1 or claim 2, **characterized in that** the pinch branch (18B; 118B) of each fastener tab (18; 118) extends over a length (L18B) that is at least equal to 10%, preferably at least equal to 20%, of the width (LC) of the belt (12), measured in the direction of the axis (A) of the collar.

4. A device according to any one of claims 1 to 3, **characterized in that** the sleeve (16) is rolled up over a roll-up diameter (DE) that, in a free state, i.e. when the sleeve is separated from the belt (12), is greater than the diameter of the sleeve when it is carried by the belt via the fastener tabs (18; 118).

5. A device according to any one of claims 1 to 4, **characterized in that** the fastener tabs (18; 118) are all situated on a same side of the belt (12).

6. A device according to any one of claims 1 to 5, **characterized in that** each fastener tab (18; 118) presents a spacer portion (18C; 118C) between the fastening zone (18A; 118A) and the pinch branch (18B; 118B), which spacer portion (18C; 118C) is spaced apart from the belt (12) and defines an empty space (E) between the belt and the sleeve.

7. A device according to claim 6, **characterized in that** the spacer portion (18C; 118C) extends substantially perpendicularly to the axis (A) of the collar.

8. A device according to any one of claims 1 to 7, **characterized in that** the belt (12) presents first and second flanks (12C, 12D) between which there is defined an inner trough suitable for receiving a widening (1A, 1B) of the article that is to be clamped by the collar, each of said flanks sloping relative to the axis (A) of the collar.

9. A device according to claim 8, **characterized in that** the pinch branches (18B; 118B) of the fastener tabs (18; 118) co-operate with the same flank (12D) and extend substantially parallel to said flank (12D).

10. A device according to claim 8 or claim 9, **characterized in that** at least one of the fastener tabs (118) is a fastener and retainer tab that presents at least one retainer branch (118D), which, in a free state, is offset towards the axis of the collar relative to the pinch branch (118B).

11. A device according to claim 10, **characterized in that** the retainer branch (118D) and the pinch branch (118B) are both formed at the free end of the fastener and retainer tab (118) opposite its fastening zone, and they are separated by a cut-out (118E).

12. A device according to any one of claims 1 to 11, **characterized in that** the collar (10) presents tightening lugs (12A, 12B) projecting radially relative to the belt, and **in that** the sleeve (16) presents a window (20) through which the tightening lugs extend.

13. A device according to claim 12, **characterized in that** the sleeve (16) presents a first end (16A) situated in the vicinity of one of the tightening lugs (12B) and a second end (16B) that includes the window (20) and that has a free end (16B') that co-operates with the first end.

14. A device according to any one of claims 1 to 13, **characterized in that** the sleeve (16) presents at least one circumferential rib (17).

15. A device according to claim 14, taken in combination with claim 13, **characterized in that** the circumferential rib (17) extends from the first end (16A) until it reaches the free end (16B'), and forms a projection on a first face of the sleeve and a hollow in the opposite second face, and **in that** the free end (16B') and the first end (16A) cover each other, the projection formed by the rib on the first face of one of the elements constituted by the free end and the first end penetrating into the hollow formed by the rib in the second face of the other of said elements.
